# EUROPÄISCHE PATENTSCHRIFT

(11) **EP 0 801 255 B1**
(45) Veröffentlichungstag und Bekanntmachung des Hinweises auf die Patenterteilung: **29.08.2001**
(21) Anmeldenummer: 97105016.6
(22) Anmeldetag: 25.03.1997
(51) Int. Cl.: F16K 11/074

(54) **Drehschieber**
Rotary gate valve
Tiroir rotative

(30) Priorität: 13.04.1996 DE 19614653
(43) Veröffentlichungstag der Anmeldung: 15.10.1997
(73) Patentinhaber: Friedrich Grohe AG & Co. KG, 58675 Hemer (DE)
(72) Erfinder: Pawelzik, Manfred, 59494 Soest (DE); Gebhardt, Wolfgang, 58706 Menden (DE)

(56) Entgegenhaltungen:
- EP-A- 0 063 627
- EP-A- 0 333 088
- DE-A- 2 841 998
- DE-A- 3 638 959
- US-A- 5 190 077

## Beschreibung

Die Erfindung betrifft ein Ventil, insbesondere für sanitäre Anlagen, mit den im Oberbegriff des Anspruchs 1 angegebenen Merkmalen.
Ein Ventil dieser Gattung ist aus der EP-A-333 088 bekannt.
Außerdem ist aus der deutschen Patentschrift DE 28 41 998 C2 ein Ventil mit zwei Keramikscheiben bekannt, wobei in beiden Scheiben im Zentrum jeweils eine durchgehende Zulauföffnung ausgebildet ist, so daß der Druck des zuströmenden Mediums die beiden Ventilscheiben aneinanderdrückt. Zu der zentralen Zulauföffnung sind auf einem Lochkreis im Querschnitt geringfügig kleinere Auslaßöffnungen in den Keramikscheiben angeordnet, mit denen in Abhängigkeit vom Drehwinkel das Medium verschiedenen Verbrauchern zugeleitet werden kann. Die Auslaßöffnungen können hierbei in den Keramikscheiben so plaziert werden, daß in bestimmten Drehstellungen ein Absperren der Auslaßöffnungen zu den Verbrauchern erreichbar ist.
Die Anordnung der Zulauföffnung im Zentrum der Keramikscheiben erfordert jedoch einen relativ großen Durchmesser der Scheiben und ein entsprechend großes Ventilgehäuse, was insbesondere bei Aufputzsanitärarmaturen als nachteilig angesehen werden kann.
Ferner ist aus der deutschen Patentschrift DE 36 38 959 C2 ein Umschaltventil bekannt, bei dem die Mediumszuführung außen an den Ventilscheiben vorbeigeführt wird, so daß vom zuströmenden Medium ebenfalls die beiden Ventilscheiben aneinandergedrückt werden. Durch die außerhalb der Ventilscheiben angeordneten Zuführkanäle ist es auch bei dieser Ausbildung erforderlich, das Ventilgehäuse im Durchmesser relativ groß auszulegen.

Der Erfindung liegt die Aufgabe zugrunde, das im Oberbegriff des Anspruchs 1 angegebene Ventil zu verbessern.

Diese Aufgabe wird erfindungsgemäß mit den Merkmalen des Patentanspruchs 1 gelöst.
Weitere Ausgestaltungen der Erfindung sind in den Ansprüchen 2 bis 16 angegeben.

Mit den vorgeschlagenen Maßnahmen wird erreicht, daß das Ventil relativ schlank dimensioniert werden kann, wobei, bezogen auf den Durchmesser der Scheiben, eine optimale Durchflußleistung erreichbar ist.
Vorteilhaft können die Durchtrittsquerschnitte der Austrittsöffnungen zu den Verbrauchern entsprechend der erforderlichen Durchflußmenge pro Zeiteinheit festgelegt werden.
Zweckmäßig kann für die einen relativ großen Bogenbereich erfordernde Durchtrittsöffnung in der drehfesten Scheibe ein Steg angeordnet werden, mit dem der Außenrand der Scheibe stabilisiert werden kann.
Vorteilhaft kann derjenige Rand der Durchtrittsöffnung für den Abfluß, der beim Öffnungsvorgang zunächst freigegeben wird, zahnförmig ausgebildet sein, so daß beim Öffnungsvorgang der Durchfluß zunächst von den einzelnen Zahnlücken in Einzelströme aufgeteilt wird, wodurch eine Minimierung der Fließgeräuschentwicklung erreichbar ist. Darüber hinaus ermöglichen die Zahnausbildungen ein feinfühligeres Öffnen und Schließen des Ventils. Da die höchsten Strömungsgeschwindigkeiten im Bereich der Auslaßdurchtrittsöffnungen in dem erfindungsgemäßen Ventil auftreten, sind die Verzahnungen in diesem Bereich angeordnet. Sie können an der drehbaren und/oder drehfesten Scheibe ausgebildet sein. Vorteilhaft werden sie an der drehfesten Scheibe ausgebildet. Zur weiteren Verbesserung der Fließgeräuschminderung und zur weiteren Verfeinerung des Öffnungs- und Schließverhaltens kann vorteilhaft die mit den Zähnen bzw. Zahnlücken zusammenwirkende Seite der Durchtrittsöffnungen in der drehbaren Scheibe bzw. dem Drehschieber um einen Winkel geneigt zum Radius der Scheibe ausgebildet werden, so daß die Zahnlücken in Abhängigkeit vom Drehwinkel nacheinander zur Wirkung gelangen.

Ein Ausführungsbeispiel der Erfindung ist in der Zeichnung dargestellt und wird im folgenden näher beschrieben. Es zeigt
- Figur 1: einen Teil einer Wassermischbatterie mit einem Badewannenauslauf und einem Brauseanschluß im Längsschnitt;
- Figur 2: die Wassermischbatterie gemäß Figur 1 in der Schnittebene II;
- Figur 3: das in Figur 1 in der Wassermischbatterie eingesetzte Ventil als Baueinheit in vergrößerter Darstellung;
- Figur 4: den in Figur 3 gesetzten Boden im Längsschnitt;
- Figur 5: einen Teil des in Figur 4 dargestellten Bodens in vergrößerter Darstellung;
- Figur 6: die in Figur 3 gezeigte drehfeste Scheibe in vergrößerter Darstellung in Draufsicht auf die polierte Dichtfläche;
- Figur 7: die in Figur 6 gezeigte Scheibe in der Schnittebene VII;
- Figur 8: die in Figur 3 gezeigte drehbare Scheibe in vergrößerter Darstellung in Draufsicht auf die polierte Dichtfläche;
- Figur 9: die in Figur 8 gezeigte Scheibe in der Schnittebene IX;
- Figur 10: das in Figur 3 gezeigte Scheibenpaket, bestehend aus der drehbaren und drehfesten Scheibe, in Draufsicht in der Schließstellung;
- Figur 11: das in Figur 10 gezeigte Scheibenpaar in geringfügiger Offenstellung zum Brauseanschluß;
- Figur 12: die in Figur 10 gezeigte Scheibenanordnung in der maximalen Offenstellung zum Brausenanschluß;
- Figur 13: das in Figur 10 gezeigte Scheibenpaar in geringfügiger Offenstellung zum Badewannenauslauf;
- Figur 14: das in Figur 10 dargestellte Scheibenpaar in voller Öffnungsstellung zum Badewannenauslauf.

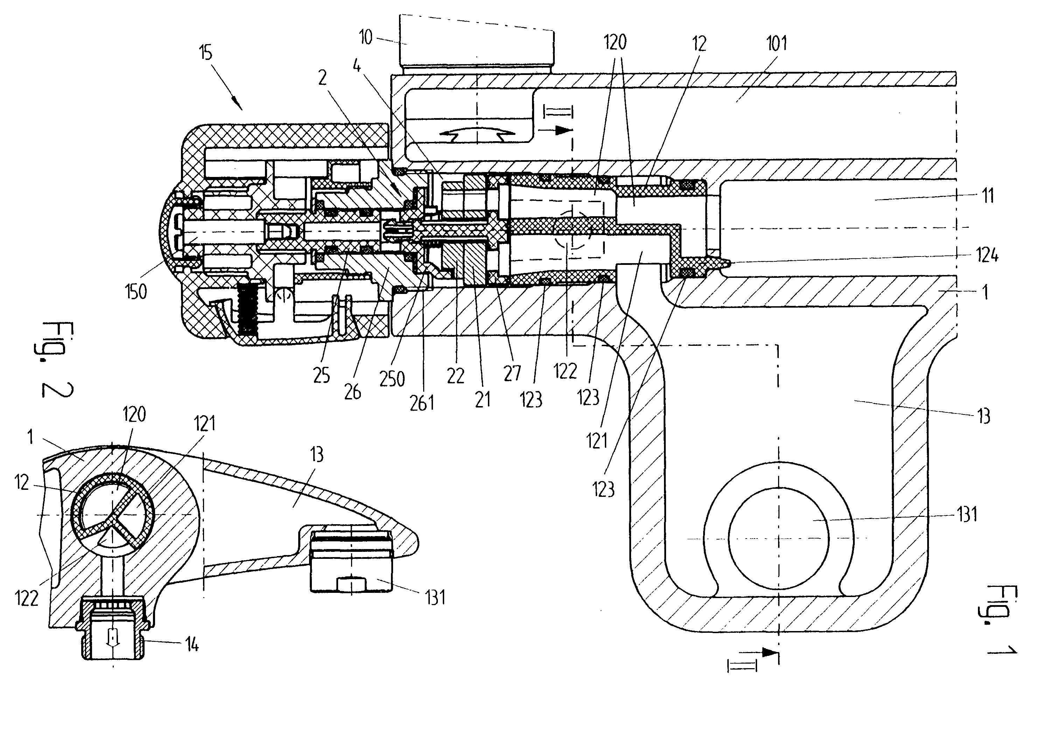

In den Figuren 1 und 2 der Zeichnung ist eine zum Teil dargestellte sanitäre Wasserarmatur bzw. Wassermischbatterie dargestellt. Die Armatur besteht aus einem Armaturenkörper 1, der mit einem Zulauf 10 an das Heißwasserversorgungsleitungsnetz und mit einem weiteren Anschluß - in der Zeichnung nicht dargestellt - an das Kaltwasserversorgungsleitungsnetz angeschlossen ist. In dem nicht dargestellten Teil des Armaturenkörpers 1 ist ein Wassermischventil, insbesondere ein thermostatgeregeltes Mischventil, wie es aus der europäischen Patentschrift EP 0 242 680 B1 bekannt ist, angeordnet. Der Wasserzulauf 10 für Heißwasser ist hierbei über einen Heißwasserkanal 101 mit dem Mischventil verbunden. In dem in der Zeichnung nicht dargestellten Teil des Armaturenkörpers 1 ist ein weiterer Wasserzulauf für Kaltwasser ausgebildet und ebenfalls mit dem Mischventil verbunden. Das mit dem Mischventil erzeugte Mischwasser wird in eine Mischwasserkammer 11 des Armaturenkörpers 1 abgegeben. Stromabwärts hinter der Mischwasserkammer 11 ist in dem Armaturenkörper 1 ein mit O-Ringen 123 gedichteter Einsatz 12 angeordnet. In dem Einsatz 12 sind, wie es insbesondere aus Figur 2 der Zeichnung zu entnehmen ist, drei Kanäle parallel nebeneinander angeordnet, und zwar ein Mischwasserkanal 120, ein Auslaßkanal 121 für einen Badewannenauslauf 13 sowie ein Auslaßkanal 122 zu einem Brauseanschluß 14. An dem Brauseanschluß 14 kann beispielsweise eine Schlauchleitung für eine Handbrause angeschlossen werden. Der Badewannenauslauf 13 ist am Armaturenkörper 1 vorkragend ausgebildet und trägt ein Auslaufmundstück 131 für den Wasseraustritt. An der stromabwärts gelegenen Stirnseite des Einsatzes 12 ist ein Umschalt- und Mengenregulierventil in Form einer Baueinheit 2 angeordnet. Dieses Ventil ist mit einem Drehgriff 15 betätigbar.

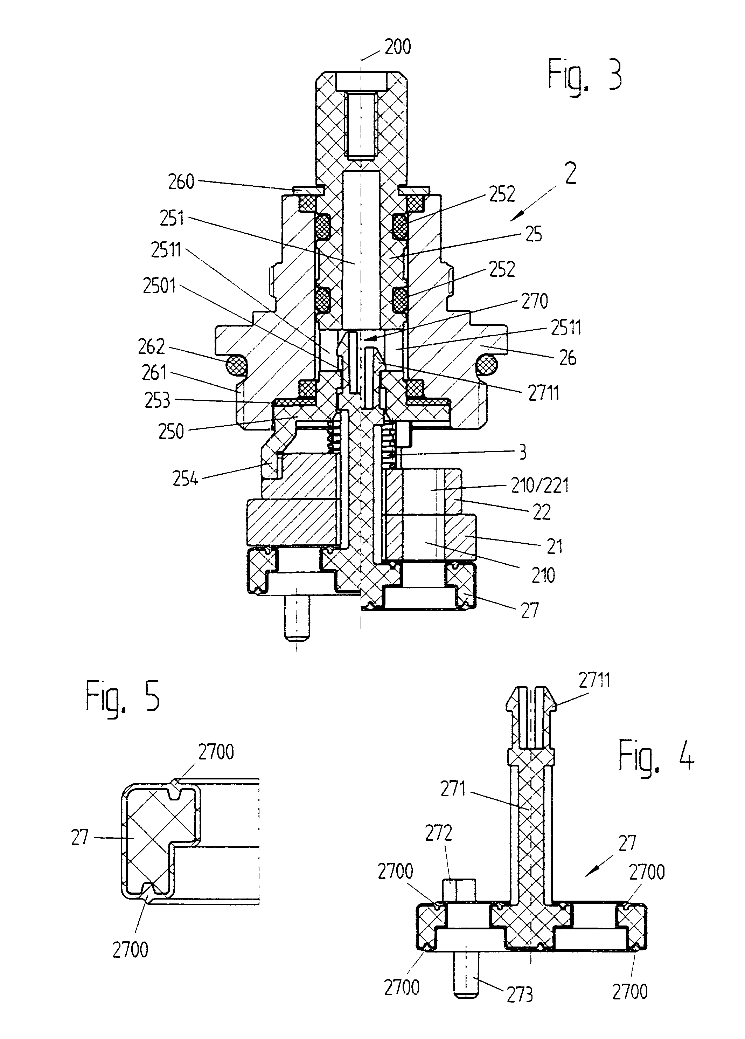

Das als Baueinheit 2 ausgebildete Umschalt- und Mengenregulierventil ist in Figur 3 im vergrößerten Maßstab dargestellt. Die Baueinheit 2 wird dabei von einer drehfest, auf einem Boden 27 gehalterten Scheibe 21 aus Keramikmaterial und einer an der Scheibe 21 angelagerten, mit Hilfe einer Spindel 25 und einem Mitnehmer 250 drehbar gehalterten Scheibe 22, ebenfalls aus Keramikmaterial, gebildet. Die Spindel 25 ist hierbei einstükkig mit dem Mitnehmer 250 aus Kunststoff hergestellt und in einem Kopfstück 26 mit O-Ringen 251 gedichtet gelagert. Axial ist die Spindel 25 im Bereich des Mitnehmers 250 mit einer Gleitscheibe 253 an einer Stirnseite des Kopfstücks 26 abgestützt. Zur drehfesten Verbindung weist der Mitnehmer 250 drei etwa symmetrisch angeordnete Vorsprünge 254 auf, die in Ausnehmungen 290 der Scheibe 22 einfassen. Die drehfeste Scheibe 21 weist dagegen zwei etwa gegenüberliegende Ausnehmungen 29 auf, in die zwei axial gegenüberliegend angeordnete Vorsprünge 272 des Bodens 27 einfassen. An der dem Vorsprung 272 gegenüberliegenden Stirnseite weist der Boden 27 außerdem zwei Vorsprünge 273 auf, mit denen der Boden 27 in der Stecklage in dem Armaturenkörper 1 drehfest in entsprechende Bohrungen des Einsatzes 12 einfaßt. Der Einsatz 12 weist an der gegenüberliegenden Stirnseite einen Zapfen 124 auf, mit dem er in eine entsprechende Aufnahmebohrung des Armaturenkörpers 1 einfaßt und somit ebenfalls drehfest gehaltert ist.

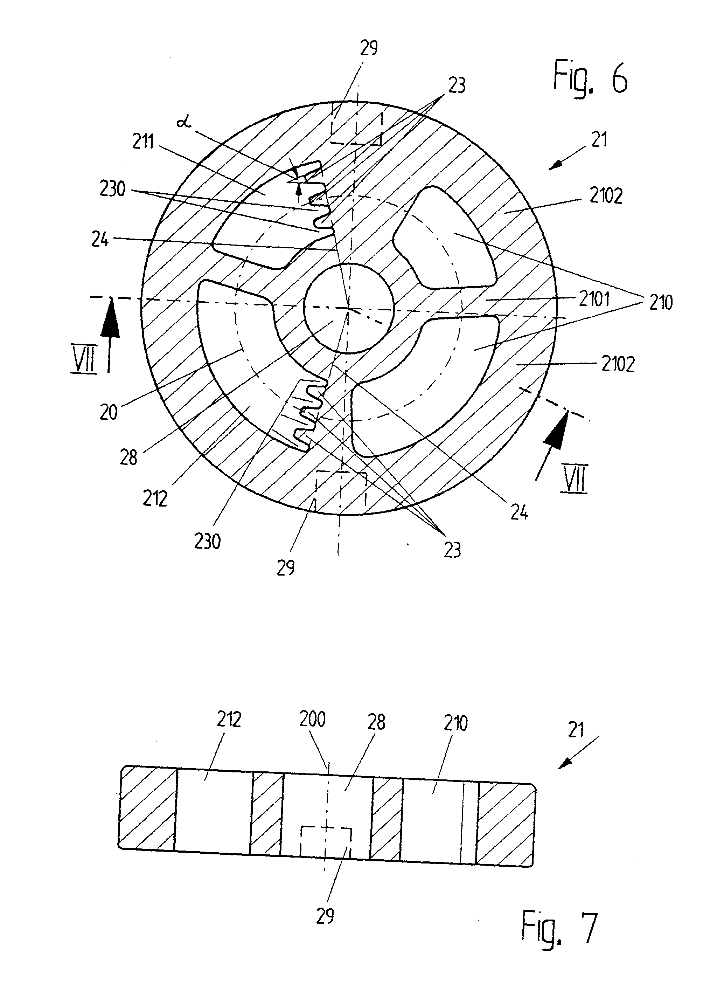

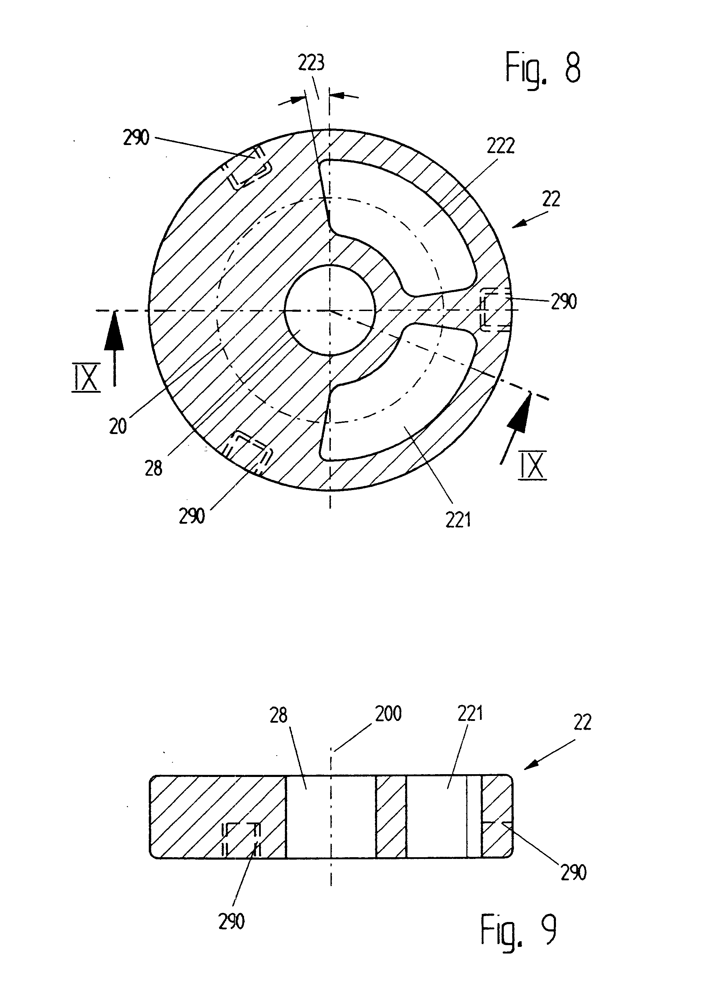

Die drehfest gehaltene Scheibe 21 weist, wie es insbesondere aus Figur 6 zu entnehmen ist, Kreisform auf und hat in der rechten Hälfte eine kreisringausschnittförmige Durchtrittsöffnung 210, die mit einem Steg 2101 zur Stabilisierung des Außenrands 2102 der Scheibe 21 im Bereich der Durchtrittsöffnung 210 versehen ist. Die Durchtrittsöffnung 210 ist dabei entsprechend der erforderlichen Durchflußleistung zu etwa einem Drittel für den Brausenanschluß 14 und zu etwa zwei Dritteln für den Badewannenauslauf 13 von dem Steg 2101 unterteilt.
In der linken Hälfte der Scheibe 21 ist im oberen Bereich eine kreisringausschnittförmige Durchtrittsöffnung 211 für einen Brausenanschluß und im unteren Bereich eine kreisringausschnittförmige Durchtrittsöffnung 212 für einen Badewannenanschluß ausgebildet. Die drei Durchtrittsöffnungen 210,211,212 sind auf einem Lochkreis 20 von etwa 15 mm Durchmesser angeordnet. Die beiden Durchtrittsöffnungen 211 und 212 sind an der der Durchtrittsöffnung 210 zugekehrten Stirnseite mit drei in Reihe auf einem Radius 24 der Scheibe 21 angeordneten Zähnen 23 versehen, die in die Durchtrittsöffnungen 211 und 212 hineinragen. Die drei Zähne 23 sind symmetrisch an der Stirnseite angeordnet, so daß in jeder Durchtrittsöffnung jeweils vier Zahnlücken 230 gebildet werden. Die Zähne 23 ragen hierbei vom Radius 24 etwa 1,2 mm in die Durchtrittsöffnung 211,212 hinein, dabei haben die Zähne 23 einen Flankenwinkel α von etwa 12°. Im Zentrum der Scheibe 21 ist eine Bohrung 28 für die Durchführung eines Zapfen 271 des Bodens 27 ausgebildet. Die an der Scheibe 21 angelagerte drehbare Scheibe 22 ist ebenfalls, wie es aus der Zeichnung Figur 8 zu entnehmen ist, kreisförmig ausgebildet und im Außendurchmesser etwas kleiner als die Scheibe 21 gehalten. Auf dem gleichen Lochkreis 20 sind etwa symmetrisch in der rechten Hälfte zwei kreisringausschnittförmige Durchtrittsöffnungen 221,222 ausgebildet. Die Durchtrittsöffnung 222 wirkt dabei mit der Durchtrittsöffnung 211 in der Scheibe 21 zusammen, während die Durchtrittsöffnung 221 andererseits mit der Durchtrittsöffnung 212 der Scheibe 21 zusammenwirkt. Außerdem weist die Scheibe 22 drei etwa symmetrisch angeordnete Ausnehmungen 290 für den Mitnehmer 250 sowie eine Bohrung 28 für die Hindurchführung des Zapfens 271 des Bodens 27 auf. Die den Durchtrittsöffnungen 211,212 zugekehrten Stirnseiten der Durchtrittsöffnungen 221,222 sind mit einem Winkel 223 von 5 bis 10°, vorzugsweise 6°, geneigt zum Radius angeordnet.
Die beiden aus Keramikwerkstoff hergestellten Scheiben liegen mit einer geglätteten Dichtfläche aneinander, so daß ein wasserdichtes Absperren der Durchtrittsöffnungen 211 und 212 gewährleistet ist. Der Boden 27 durchgreift die beiden Scheiben 21,22 in der Bohrung 28 mit dem Zapfen 271, an dessen vorstehendem Ende federnde Zungen 2711 angeformt sind. In der Spindel 25 ist eine Sackbohrung 251 ausgebildet, die eine Schulter 2501 bildet. In diese Sackbohrung 251 kann der Zapfen 271 eingeschoben werden, so daß die federnden Zungen 2711 hinter der Schulter 2501 einrasten und der Boden 27 mit der Spindel 25 verbunden ist. Die federnden Zungen 2711 sind dabei an dem Zapfen 271 so plaziert, daß axial die Fertigungstoleranzen der Einzelteile ausgeglichen werden können. In Figur 3 der Zeichnung sind in der rechten Bildhälfte die federnden Zungen 2711 in der Rastposition unmittelbar an der Schulter 2501 angeordnet, während sie sich in der linken Bildhälfte mit Spiel oberhalb der Schulter 2501 befinden. Oberhalb der Schulter 2501 ist in der Spindel 25 ein Radialdurchbruch 2511 vorgesehen. Durch diesen Radialdurchbruch 2511 können die Zungen 2711 bei einer Demontage der Baueinheit 2 aus ihrer Rastposition ausgelenkt werden. Außerdem ist konzentrisch zum Zapfen 271 eine Schraubenfeder 3 zwischen der oberen Stirnfläche der drehbaren Scheibe 22 und der unteren Stirnfläche des Mitnehmers 250 angeordnet, so daß die Scheibe 22 mit einer Mindestanpresskraft gegen die Scheibe 21 gedrückt wird. Zur Abdichtung, einerseits zur Scheibe 21 und andererseits zum Einsatz 12, trägt der Boden 27 angespritzte Dichtungen 2700 um die entsprechenden Bodendurchtrittsöffnungen, wie es insbesondere aus Figur 4 und 5 zu entnehmen ist. Mit diesen Dichtungen 2700 sind die Durchtrittsöffnungen 210,211,212 der Scheibe 21 mit dem Mischwasserkanal 120, dem Auslaßkanal 121 zum Badewannenauslauf und dem Auslaßkanal 122 zum Brauseauslaß gedichtet verbunden.

Die vorstehend beschriebene Aufputzsanitärarmatur kann in folgender Weise montiert werden:
Zunächst wird der Boden 27 mit den Scheiben 21,22 und der Schraubenfeder 3 zusammengefügt. Anschließend wird die Spindel 25 mittels Schnappverbindung 270 mit dem komplettierten Boden 27 verbunden, wonach die drei Vorsprünge 254 in die Ausnehmungen 290 einfassen und die Schraubenfeder 3 entsprechend vorgespannt wird. Nunmehr kann das Kopfstück 26 mit der Gleitscheibe 253 auf die Spindel 25 aufgeschoben werden und in der Stecklage mit einem Sprengring 260 in der axialen Stecklage gesichert werden. Damit ist die Baueinheit 2 komplettiert.
In den fertig hergestellten Armaturenkörper 1 wird zunächst der Einsatz 12 mit den O-Ringen 123 in eine Aufnahmebohrung eingebracht. Danach kann die Baueinheit 2 in den vorderen Bereich der Aufnahmebohrung des Armaturenkörpers 1 eingeschoben und mittels Gewinde 261 und einem O-Ring 262 dicht eingeschraubt werden. Hiernach kann der Drehgriff 15 mit einer Befestigungsschraube 150 an der Spindel 25 befestigt werden. In dem stromaufwärts gelegenen Teil des Armaturenkörpers 1 - in der Zeichnung nicht dargestellt - kann parallel das in der EP 0 242 680 B1 beschriebene Mischventil einmontiert werden.

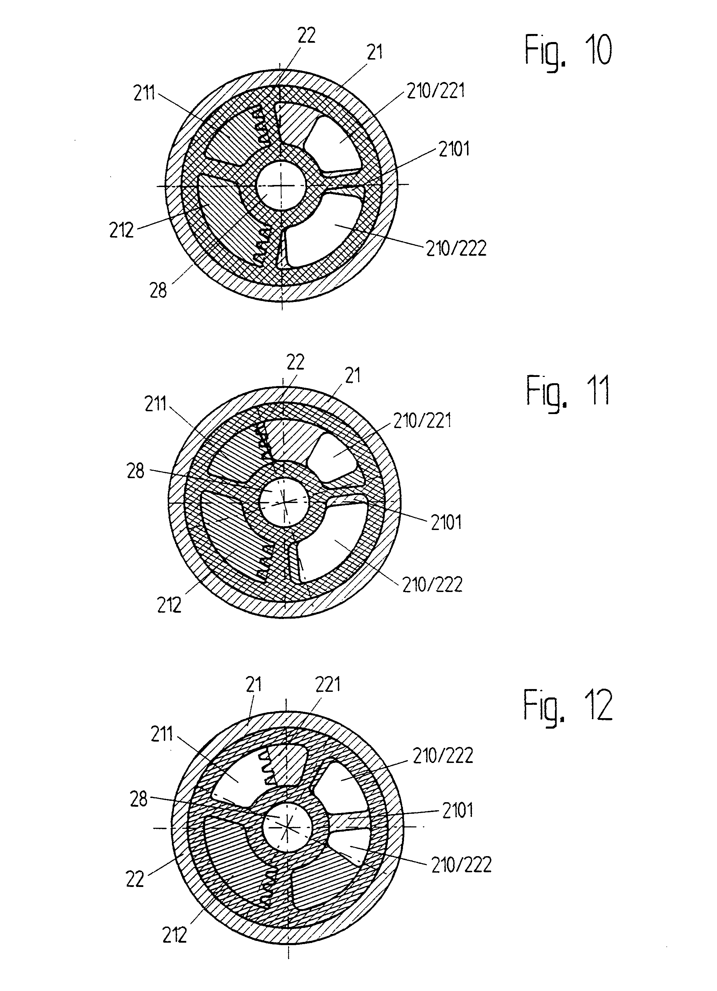

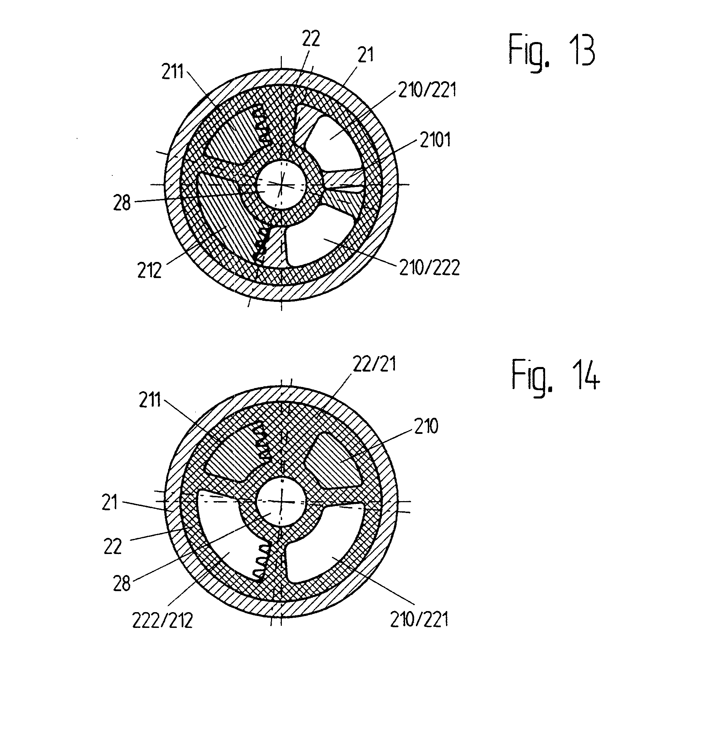

Die vorstehend beschriebene Aufputzwasserarmatur hat folgende Funktionsweise:
Das von den beiden Versorgungsleitungsnetzen dem Armaturenkörper 1 zugeführte Heißwasser und Kaltwasser wird in dem in der Zeichnung nicht dargestellten Mischventil zu temperiertem Wasser gemischt und über die Mischwasserkammer 11 in den Mischwasserkanal 120 des Einsatzes geführt. Von hier gelangt es über eine Durchtrittsöffnung im Boden 27 in die Durchtrittsöffnung 210 der Scheibe 21 und von hier durch die Durchtrittsöffnung 221 und 222 der drehbaren Scheibe 22 in eine Druckkammer 4 und drückt die drehbare Scheibe 22 zusammen mit der Schraubenfeder 3 gegen die drehfest am Boden 27 gehalterte Scheibe 21.
In der in Figur 10 gezeigten Drehposition der Scheiben 21 und 22 zueinander sind die Durchtrittsöffnungen 211 und 212 abgesperrt. In dieser Drehposition erfolgt somit kein Wasseraustritt.
Wird die Scheibe 22 mit dem Drehgriff 15 entgegen dem Uhrzeigersinn um eine Drehachse 200 gedreht, so gelangt die Durchtrittsöffnung 221 zunehmend mit der Durchtrittsöffnung 211 in Überdeckung, wie es insbesondere aus Figur 11 zu entnehmen ist. Hierbei gelangt zunächst die äußere Zahnlücke 230 der Durchtrittsöffnung 221 in Überdeckung und nachfolgend die weiter innenliegenden Zahnlücken 230, so daß nacheinander zunehmende Teilströme in die Durchtrittsöffnung 211 für den Brausenanschluß 14 feinfühlig und geräuscharm übertreten können. Danach wird der gesamte Querschnitt der ringförmigen Durchtrittsöffnung 211 zunehmend freigegeben, so daß in der Endstellung, wie sie in Figur 12 dargestellt ist, der volle Querschnitt der Durchtrittsöffnung 211 freigegeben ist. Da für Brausen in der Regel eine geringere Durchflußleistung benötigt wird als für den Badewannenauslauf, ist der Querschnitt der Durchtrittsöffnung 211 kleiner als der Querschnitt der Durchtrittsöffnung 212 ausgelegt.
Wird dagegen die Scheibe 22 mit dem Drehgriff 15 aus der in Figur 10 dargestellten Absperrstellung im Uhrzeigersinn gedreht, so gelangt in gleicher Weise zunehmend die Durchtrittsöffnung 212 mit der Durchtrittsöffnung 222 in Überdeckung, so daß zunehmend in Abhängigkeit vom Drehwinkel Mischwasser dem Badewannenauslauf 13 zugeführt wird. In Figur 14 ist die Scheibenposition bei voll geöffneter Durchtrittsöffnung 222 für den Badewannenauslauf 13 dargestellt.

Bei dem vorstehend beschriebenen Ausführungsbeispiel ist das erfindungsgemäße Ventil für die Umschaltung und Durchflußmengensteuerung in einer Aufputzarmatur angeordnet. Selbstverständlich kann das Ventil auch bei Unterputzarmaturen zur Durchflußregelung des Mischwassers und der Umschaltung zwischen zwei Verbrauchern eingesetzt werden. Auch kann statt Mischwasser Kalt- oder Heißwasser oder ein anderes Medium eingesetzt werden.

## Patentansprüche

1. Ventil, insbesondere für sanitäre Anlagen, mit einem wenigstens eine Zulauföffnung (120) und wenigstens zwei Ablauföffnungen (121,122) aufweisenden Gehäuse, in dem eine drehfest gehaltene Scheibe (21) als Ventilsitz und eine über eine Betätigungsspindel (25) drehbare, an der drehfesten Scheibe angelagerte Scheibe (22) als Drehschieber vorgesehen ist, wobei:
- in den beiden Scheiben (21,22) Durchtrittsöffnungen (210,211,212,221,222) ausgebildet sind, die in jeder Stellung der drehbaren Scheibe (22) den Durchtritt des Mediums ermöglichen;
- mit der drehbaren Scheibe (22) in Abhängigkeit von der Drehstellung Durchtrittsöffnungen für den Abfluß freigebbar sind;
- bei beiden Scheiben (21,22) die Durchtrittsöffnungen (210,211,212,221,222) für den Zufluß und den Abfluß auf einem konzentrisch zur Drehachse (200) angeordneten Lochkreis (20) ausgebildet sind;
- in der drehfesten Scheibe (21) in der einen Scheibenhälfte eine Durchtrittsöffnung (210) für den Zufluß und in der anderen Scheibenhälfte zwei Durchtrittsöffnungen (211,212) für den Abfluß zu verschiedenen Verbrauchern ausgebildet sind;
**dadurch gekennzeichnet**, daß in der drehbaren Scheibe (22) zwei Durchtrittsöffnungen (221,222) ausgebildet sind, derart, daß in jeder Drehstellung der Zufluß durch die beiden Scheiben (21,22) freigegeben ist, wobei aus einer Absperrstellung der beiden Durchtrittsöffnungen (211,212) für den Abfluß durch eine Linksdrehung der drehbaren Scheibe (22) der Querschnitt der einen (211) dieser beiden Durchtrittsöffnungen und damit eine Verbindung zwischen der Zulauföffnung (120) und der einen Ablauföffnung (122) zunehmend freigegeben wird, während durch eine Rechtsdrehung der drehbaren Scheibe (22) der Querschnitt der anderen (212) dieser beiden Durchtrittsöffnungen und damit eine Verbindung zwischen der Zulauföffnung (120) und der anderen Ablauföffnung (121) zunehmend freigegeben wird.

2. Ventil nach Anspruch 1, **dadurch gekennzeichnet**, daß die Durchtrittsöffnungen (210,211,212,221,222) wenigstens im Bereich der Dichtflächen der beiden Scheiben (21,22) kreisringausschnittförmig ausgebildet sind.

3. Ventil nach Anspruch 2, **dadurch gekennzeichnet**, daß die für den Zufluß vorgesehene Durchtrittsöffnung (210) in der drehfesten Scheibe (21) mit einem Steg (2101) unterteilt ist, so daß mit dem Steg (2101) eine Stabilisierung des Außenrandes (2102) der drehfesten Scheibe (21) erzielt wird.

4. Ventil nach Anspruch 3, **dadurch gekennzeichnet**, daß die eine für den Abfluß vorgesehene Durchtrittsöffnung (211) mit einem Brauseanschluß (14) und die andere Durchtrittsöffnung (212) mit einem Badewannenauslauf (13) verbunden ist, wobei der Steg (2101) die kreisringausschnittförmige Durchtrittsöffnung (210) für den Zufluß in eine kleinere, der Scheibenhälfte mit dem Brauseanschluß (14) angenäherte und in eine größere, der Scheibenhälfte mit dem Badewannenauslauf (13) angenäherte Öffnung unterteilt.

5. Ventil nach Anspruch 4, **dadurch gekennzeichnet**, daß die für dem Zufluß vorgesehene Durchtrittsöffnung (210) entsprechend der erforderlichen Durchflußleistung von dem Steg (2101) unterteilt ist, vorzugsweise zu etwa einem Drittel für den Brauseanschluß (14) und zu etwa zwei Dritteln für den Badewannenauslaß (13).

6. Ventil nach einem der Ansprüche 1 bis 5, **dadurch gekennzeichnet**, daß die Durchtrittsöffnungen (211, 212) für den Abfluß an der beim Öffnungsvorgang zunächst in Überdeckung gelangenden Seite an einer oder an beiden Scheiben (21,22) mit Zähnen (23) versehen ist, die in die Öffnung vorstehen, so daß beim Öffnungsvorgang am Anfang und beim Schließvorgang am Ende der Durchtritt von Zahnlücken (230) in einzelne Durchtrittskanäle unterteilt ist.

7. Ventil nach Anspruch 6, **dadurch gekennzeichnet**, daß die Zähne (23) an den Durchtrittsöffnungen (211, 212) für den Abfluß der drehfesten Scheibe (21) angeordnet sind und jeweils mit dem Zahnfuß auf dem Radius (24) der Scheibe (21) angeordnet sind, während die Seite der Durchtrittsöffnungen (221,222) in der drehbaren Scheibe (22), die beim Öffnungsvorgang zunächst mit den Zähnen (23) in Verbindung tritt mit einem Winkel (223) von 5 bis 10° zum Radius (24) geneigt, vorzugsweise 6°, angeordnet ist, so daß beim Öffnungsvorgang die Zahnlücken (230) entsprechend dem Drehwinkel nacheinander den Durchtritt freigeben.

8. Ventil nach Anspruch 7, **dadurch gekennzeichnet**, daß bei einem Lochkreisdurchmesser (20) von 15 mm die Zähne (23) eine Zahnhöhe von etwa 1 bis 2 mm, vorzugsweise 1,2 mm aufweisen.

9. Ventil nach Anspruch 8, **dadurch gekennzeichnet**, daß drei Zähne (23) in einer Reihe auf dem Radius (24) angeordnet sind, so daß vier Zahnlücken (230) gebildet sind.

10. Ventil nach einem der Ansprüche 1 bis 9, **dadurch gekennzeichnet**, daß die Scheiben (21,22) mit der Spindel (25) und einem Mitnehmer (250) und den Dicht- und Andrückelementen mit einem Kopfstück (26) zu einer Baueinheit (2) zusammengefaßt sind, die als Einheit in einen Armaturenkörper (1) einsetzbar ist.

11. Ventil nach Anspruch 10, **dadurch gekennzeichnet**, daß an der drehfesten Scheibe (21) ein Boden (27) drehfest zugeordnet ist, der mit einem oder mehreren Vorsprüngen (273) zur drehfesten Halterung in entsprechende Bohrungen im Armaturenkörper (1) der Stecklage einfaßt.

12. Ventil nach Anspruch 11, **dadurch gekennzeichnet**, daß der Boden (27) mittels Schnappverbindung (270) mit der Spindel (25) drehbar, aber axial festliegend verbunden ist.

13. Ventil nach Anspruch 12, **dadurch gekennzeichnet**, daß an dem Boden (27) auf der Drehachse (200) ein die Scheiben (21,22) zentral durchgreifender Zapfen (271) angeformt ist, an dessen Endbereich federnde Zungen (2711) ausgebildet sind, die in der Stecklage hinter einer Schulter (2501) in der Spindel (25) fassen und die Baueinheit (2) zusammenhalten.

14. Ventil nach wenigstens einem der Ansprüche 11 bis 13, **dadurch gekennzeichnet**, daß der Boden (27) aus Kunststoff hergestellt ist und die erforderlichen Dichtungen (2700) in dem Boden (27) als Verbundguß eingespritzt sind.

15. Ventil nach einem der Ansprüche 1 bis 14, **dadurch gekennzeichnet**, daß die Spindel (25) mit dem Mitnehmer (250) einstückig aus Kunststoff hergestellt ist.

16. Ventil nach Anspruch 15, **dadurch gekennzeichnet**, daß die Spindel (25) mit einer zentralen Sackbohrung (251) versehen ist, in der die Schulter (2501) ausgebildet ist, wobei oberhalb der Schulter (2501) ein oder mehrere Radialdurchbrüche (2511) in der Spindel (25) vorgesehen sind, so daß bei einer Demontage der Baueinheit (2) die Zungen (2711) aus ihrer Rastposition auslenkbar sind.

## Claims

1. Valve, especially for sanitary installations, having a housing which has at least one inlet hole (120) and at least two outlet holes (121, 122) and in which there are provided a non-rotatably held disc (21) as a valve seat and a disc (22) as a rotary slider abutting the non-rotatable disc, which disc (22) is rotatable by means of an actuating spindle (25), wherein:
- in both discs (21, 22) there are provided through-holes (210, 211, 212, 221, 222), which allow through-flow of medium in any position of the rotatable disc (22);
- through-holes are arranged to be freed for the outflow by means of the rotatable disc (22) in dependence upon the position of rotation;
- in the case of both discs (21, 22), the through-holes (210, 211, 212, 221, 222) for the inflow and outflow are constructed on a circle (20) for the holes, which is arranged concentrically with respect to the axis of rotation (200);
- in the non-rotatable disc (21) there are provided, in one half of the disc, a through-hole (210) for the inflow and, in the other half of the disc, two through-holes (211, 212) for the outflow to different discharge means;
**characterised in that**, in the rotatable disc (22), two through-holes (221, 222) are so constructed that the inflow through the two discs (21, 22) is freed in any position of rotation, anti-clockwise rotation of the rotatable disc (22) from a shut-off position of the two through-holes (211, 212) for the outflow increasingly freeing the cross-section of one (211) of those two through-holes and, by that means, a connection between the inlet opening (120) and one outlet opening (122) whereas clockwise rotation of the rotatable disc (22) increasingly frees the cross-section of the other (212) of those two through-holes and, by that means, a connection between the inlet opening (120) and the other outlet opening (121).

2. Valve according to claim 1, **characterised in that** the through-holes (210, 211, 212, 221, 222) are, at least in the region of the sealing surfaces of the two discs (21, 22), constructed in the shape of sectors of an annulus.

3. Valve according to claim 2, **characterised in that** the through-hole (210) provided for the inflow in the non-rotatable disc (21) is so divided by a web (2101) that stabilisation of the outer edge (2102) of the non-rotatable disc (21) is achieved by means of the web (2101).

4. Valve according to claim 3, **characterised in that** a through-hole (211) provided for the outflow is connected to a shower connection (14) and the other through-hole (212) is connected to a bath outlet (13), the web (2101) dividing the through-hole (210) in the shape of a sector of an annulus for the inflow into a smaller hole in the proximity of the half of the disc having the shower connection (14) and into a larger hole in the proximity of the half of the disc having the bath outlet (13).

5. Valve according to claim 4, **characterised in that** the through-hole (210) provided for the inflow is divided by the web (2101) in accordance with the requisite through-flow capacity, preferably into about one third for the shower connection (14) and about two thirds for the bath outlet (13).

6. Valve according to one of claims 1 to 5, **characterised in that**, on one or both discs (21, 22), the through-holes (211, 212) for the outflow are provided with teeth (23) on the side which, during the opening process, comes into overlap first, which teeth (23) project into the hole so that during the opening process, at the beginning, and during the closing process, at the end, the through-flow is divided into individual through-flow channels by gaps (230) beside the teeth.

7. Valve according to claim 6, **characterised in that** the teeth (23) are arranged at the outflow through-holes (211, 212) of the non-rotatable disc (21) and are in each case arranged with the foot of the tooth on the radius (24) of the disc (21) whereas that side of the through-holes (221, 222) in the rotatable disc (22) which first meets the teeth during the opening process is arranged on a slant with respect to the radius (24) at an angle (223) of from 5 to 10°, preferably 6°, so that during the opening process the gaps (230) beside the teeth successively free the through-flow in dependence upon the angle of rotation.

8. Valve according to claim 7, **characterised in that** when the diameter of the circle (20) for the holes is 15 mm, the teeth (23) have a tooth height of about from 1 to 2 mm, preferably 1.2 mm.

9. Valve according to claim 8, **characterised in that** three teeth (23) are so arranged in a row on the radius (24) that four gaps (230) are formed beside the teeth.

10. Valve according to one of claims 1 to 9, **characterised in that** the discs (21, 22), together with the spindle (25) and a driving element (250) and the sealing and bias elements, are combined with a head-piece (26) to form a structural unit (2), which is arranged to be inserted as a unit into a body (1) of a fitting.

11. Valve according to claim 10, **characterised in that** with the non-rotatable disc (21) there is associated a non-rotatably arranged base (27) which, for non-rotatable holding, engages by means of one or more projections (273) in corresponding holes in the body (1) of the fitting in the inserted position.

12. Valve according to claim 11, **characterised in that** the base (27) is, by means of a snap connection (270), connected to the spindle (25) in a manner that allows rotation but that fixes them axially.

13. Valve according to claim 12, **characterised in that** on the base (27) there is formed, on the axis of rotation (200), a pin (271) which passes through the discs (21, 22) centrally and on the end region of which resilient tongues (2711) are provided which, in the inserted position, engage behind a shoulder (2501) in the spindle (25) and hold the structural unit (2) together.

14. Valve according to at least one of claims 11 to 13, **characterised in that** the base (27) is made from plastics material and the requisite seals (2700) in the base (27) are injected in to form a composite casting.

15. Valve according to one of claims 1 to 14, **characterised in that** the spindle (25) is manufactured from plastics material in one piece together with the driving element (250).

16. Valve according to claim 15, **characterised in that** the spindle (25) is provided with a central blind hole (251), in which the shoulder (2501) is formed, one or more radial through-openings (2511) being so provided above the shoulder (2501) in the spindle (25) that, when the structural unit (2) is being disassembled, the tongues (2711) can be moved out of their latched-in position.

## Revendications

1. Soupape, notamment pour installations sanitaires comportant un boîtier présentant au moins une ouverture d'entrée (120) et au moins deux ouvertures de sortie (121, 122) et dans lequel un disque (21) ne pouvant tourner constitue un siège de soupape tandis qu'un disque (22) pouvant tourner sous l'action d'une tige de manoeuvre (25), est monté en tant que tiroir rotatif sur le disque non tournant, soupape dans laquelle,
- les deux disques (21, 22) sont percés d'ouvertures de passage (210, 211, 212, 221, 222) qui permettent, dans chaque position du disque rotatif (22) le passage du fluide,
- par l'intermédiaire du disque rotatif (22) et en fonction de sa position de rotation, on peut libérer des ouvertures de passage pour la sortie du fluide,
- dans les deux disques (21, 22) les ouvertures de passage (210, 211, 212, 221, 222) du flux entrant et du flux sortant sont disposées sur un cercle des trous (20), concentrique à l'axe de rotation (200),
- le disque non tournant (21) présente, dans une de ses moitiés une ouverture de passage (210) pour le flux entrant et dans l'autre moitié, deux ouvertures de passage (211, 212) pour le flux sortant à destination de différents utilisateurs,
**caractérisée en ce que**
- dans le disque tournant (22) sont percées deux ouvertures de passage (221, 222) de manière que dans chaque position de rotation, le flux entrant peut passer à travers les deux disques (21, 22), et en partant d'une position de fermeture des deux ouvertures de passage (211, 212) du flux sortant, une rotation vers la gauche du disque tournant (22) libère progressivement la section d'une de ces deux ouvertures de passage ainsi qu'une liaison entre l'ouverture d'entrée (120) et une ouverture de sortie (122), tandis qu'une rotation vers la droite du disque tournant (22) libère progressivement la section de l'autre (212) de ces deux ouvertures de passage et ainsi également une liaison entre l'ouverture d'entrée (120) et l'autre ouverture de sortie (121).

2. Soupape selon la revendication 1,
**caractérisée en ce que**
les ouvertures de passage (210, 211, 212, 221, 222) présentent au moins dans la zone des portées d'étanchéité des deux disques (21, 22) la forme d'un secteur d'anneau circulaire.

3. Soupape selon la revendication 2,
**caractérisée en ce que**
l'ouverture de passage (210) prévue pour le flux entrant est divisée, dans le disque non tournant (21) par une barrette (2101) qui a pour effet de stabiliser le bord externe (2102) du disque non tournant (21).

4. Soupape selon la revendication 3,
**caractérisée en ce que**
celle (211) des ouvertures de passage (211, 212) prévues pour le flux sortant est reliée à un raccord de douche (14) tandis que l'autre ouverture de passage (212) est reliée à un raccord de baignoire (13), la barrette (2101) divisant l'ouverture de passage (210), en forme de secteur d'anneau circulaire, destinée au flux entrant, en une ouverture plus petite, située dans la moitié du disque proche du raccord de douche (14), et en une ouverture plus grande, située dans la moitié du disque proche du raccord de baignoire (13).

5. Soupape selon la revendication 4,
**caractérisée en ce que**
l'ouverture de passage (210) prévue pour le flux entrant est divisée par la barrette (2101) en fonction du débit d'écoulement nécessaire, de préférence en un tiers environ pour le raccord de douche (14) et deux tiers environ pour le raccord de baignoire (13).

6. Soupape selon l'une quelconque des revendications 1 à 5,
**caractérisée en ce que**
dans les ouvertures de passage (211, 212) pour le flux sortant, sur le côté qui, lors de l'opération d'ouverture, vient le premier à être recouvert, il est prévu sur un ou sur les deux disques (21, 22) des dents (23) faisant saillie dans l'ouverture, de sorte qu'au début à l'ouverture et qu'à la fin à la fermeture le passage se trouve divisé en canaux individuels constitués par des entredents (230).

7. Soupape selon la revendication 6,
**caractérisée en ce que**
les dents (23) sont disposées sur les ouvertures de passage (211, 212) du flux sortant que présente le disque non tournant (21) et ont chacune leur pied sur le rayon (24) du disque (21), tandis que le côté des ouvertures de passage (221, 222) pratiquées dans le disque tournant (22) qui vient d'abord en liaison avec les dents (23) lors de l'ouverture, est incliné sur le rayon (24) d'un angle (223) de 5 à 10°, de préférence 6°, de sorte qu'à l'ouverture les entredents (230) en correspondance avec le sens de rotation, libèrent l'une après l'autre le passage.

8. Soupape selon la revendication 7,
**caractérisée en ce qu**'
avec un diamètre du cercle des trous (20) égal à 15 mm, les dents (23) ont une hauteur de 1 à 2 mm environ, de préférence 1, 2 mm.

9. Soupape selon la revendication 8,
**caractérisée en ce que**
trois dents (23) sont disposées en ligne sur le rayon (24) de sorte qu'il existe quatre entredents (230).

10. Soupape selon l'une quelconque des revendications 1 à 9,
**caractérisée en ce que**
les disques (21, 22), la tige (25), un entraîneur (250) et les éléments de pression et d'étanchéité comportant une pièce de tête (26) sont réunis en un ensemble constructif (2) qui peut être monté en bloc dans un corps de robinet (1).

11. Soupape selon la revendication 10,
**caractérisée en ce qu**'
au disque non tournant (21) est associé en rotation un fond (27) qui est garni d'une ou plusieurs saillies (273) qui pour maintenir la solidarité en rotation, sont embrochées dans des perçages correspondants du corps de robinet (1).

12. Soupape selon la revendication 11,
**caractérisée en ce que**
le fond (27) par l'intermédiaire d'une liaison par encliquetage (270) est relié à la tige de manoeuvre (25) pour pouvoir tourner, mais est fixé axialement.

13. Soupape selon la revendication 12,
**caractérisée en ce que**
sur le fond (27) est moulé un pivot (271) coaxial à l'axe de rotation (200), traversant en leurs centres les disques (21, 22) et portant, à son extrémité, des languettes élastiques (2711) qui, en position emmanchée, sont en prise derrière un épaulement (2501) de la tige de manoeuvre (25) et maintiennent l'ensemble constructif (2).

14. Soupape selon l'une quelconque des revendications 11 à 13,
**caractérisée en ce que**
le fond (27) est en matière plastique et les joints d'étanchéité nécessaires (2700) sont injectés dans le fond (27) sous la forme d'une pièce de coulée composite.

15. Soupape selon l'une quelconque des revendications 1 à 4,
**caractérisée en ce que**
la tige de manoeuvre (25) est fabriquée avec l'entraîneur (250) en une seule pièce de matière plastique.

16. Soupape selon la revendication 15,
**caractérisée en ce que**
la tige de manoeuvre (25) présente un trou borgne central (251) dans lequel est formé l'épaulement (2501) et au-dessus de l'épaulement (2501), la tige (25) présente un ou plusieurs passages radiaux (2511) de sorte que pour démonter l'ensemble (2), les languettes (2711) peuvent être déviées et quitter ainsi leur position d'arrêt.
